# FASCICULE DE BREVET EUROPEEN

(11) **EP 3 926 392 B1**
(45) Date de publication et mention de la délivrance du brevet: **02.11.2022**
(21) Numéro de dépôt: 21180209.5
(22) Date de dépôt: 18.06.2021
(51) Int. Cl.: G02F 1/01

(54) **DISPOSITIF OPTIQUE ET PROCÉDÉ DE FABRICATION**
OPTISCHES GERÄT UND HERSTELLUNGSPROZESS
OPTICAL DEVICE AND MANUFACTURING PROCESS

(30) Priorité: 19.06.2020 FR 2006465
(43) Date de publication de la demande: 22.12.2021
(73) Titulaire: Commissariat à l'Energie Atomique et aux Energies Alternatives, 75015 Paris (FR)
(72) Inventeur: CASSET, Fabrice, 38054 GRENOBLE Cedex 09 (FR)
(74) Mandataire: Hautier IP

(56) Documents cités:
- EP-A1- 3 514 614
- WO-A1-2007/065447
- US-A- 5 383 048
- US-A1- 2004 096 155
- CASSET F ET AL: "Stress optic modulator using thin-film PZT for LIDAR applications", 2019 IEEE SENSORS, IEEE, 27 octobre 2019 (2019-10-27), pages 1-4, XP033685444, DOI: 10.1109/SENSORS43011.2019.8956537
- NASER HOSSEINI ET AL: "Stress-optic modulator in TriPleX platform using a piezoelectric lead zirconate titanate (PZT) thin film", OPTICS EXPRESS, vol. 23, no. 11, 19 mai 2015 (2015-05-19), page 14018, XP055403201, DOI: 10.1364/OE.23.014018

## Description

### DOMAINE TECHNIQUE

La présente invention concerne le domaine de la photonique et de l'optoélectronique. Elle trouve au moins une application particulièrement avantageuse dans le domaine des modulateurs de phase de faisceaux optiques. Elle trouvera pour application avantageuse mais non limitative la fabrication de déphaseurs optiques comprenant un actionneur piézoélectrique.

### ETAT DE LA TECHNIQUE

Dans le domaine de la photonique, de nombreuses technologies nécessitent une modulation de phase d'un faisceau lumineux afin d'exploiter un signal optique. C'est par exemple le cas des systèmes de télécommunications. C'est également le cas des systèmes d'imagerie et de télédétection tels que les LIDAR (Light Détection And Ranging systems).

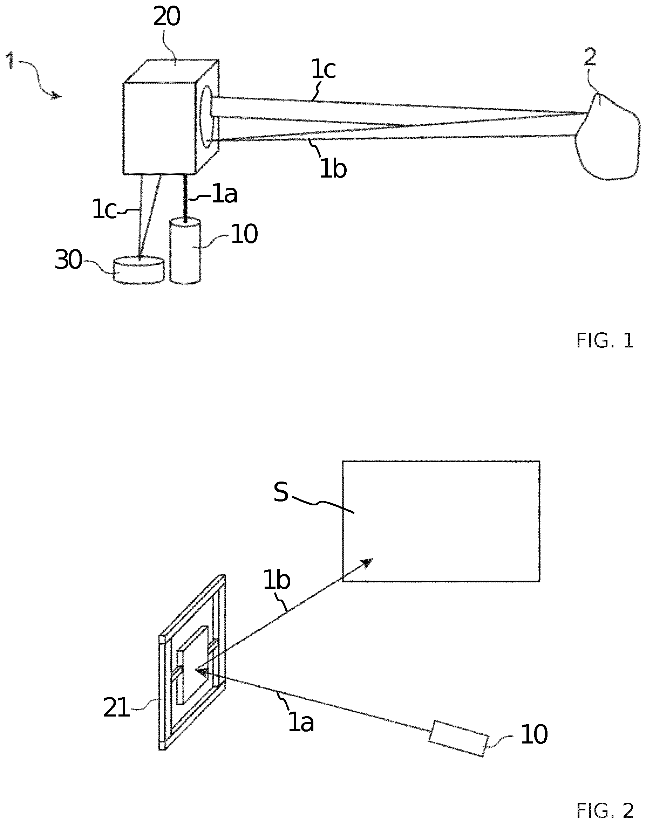

Comme illustré à la figure 1, dans un système 1 de type LIDAR, un faisceau lumineux 1a typiquement issu d'une source laser 10 est dévié par un dispositif de balayage 20 afin de balayer une zone à imager. Lorsque le faisceau incident 1b issu du dispositif de balayage 20 est réfléchi par un obstacle 2, le faisceau réfléchi 1c est collecté puis analysé par un détecteur 30. La mesure du délai entre l'émission du faisceau incident 1b et la détection du faisceau réfléchi 1c permet notamment de déterminer la distance entre le système 1 de télédétection et l'obstacle 2.

En pratique, différents dispositifs de balayage 20 peuvent être envisagés. Un micro-miroir 21 de type MEMS (Micro Electro Mechanical System) peut par exemple permettre de diriger le faisceau lumineux 1a, 1b vers la zone à imager S, comme illustré en figure 2. La réalisation d'un tel micro-miroir 21 reste néanmoins couteuse. Son intégration au sein du dispositif de balayage 20 est en outre complexe.

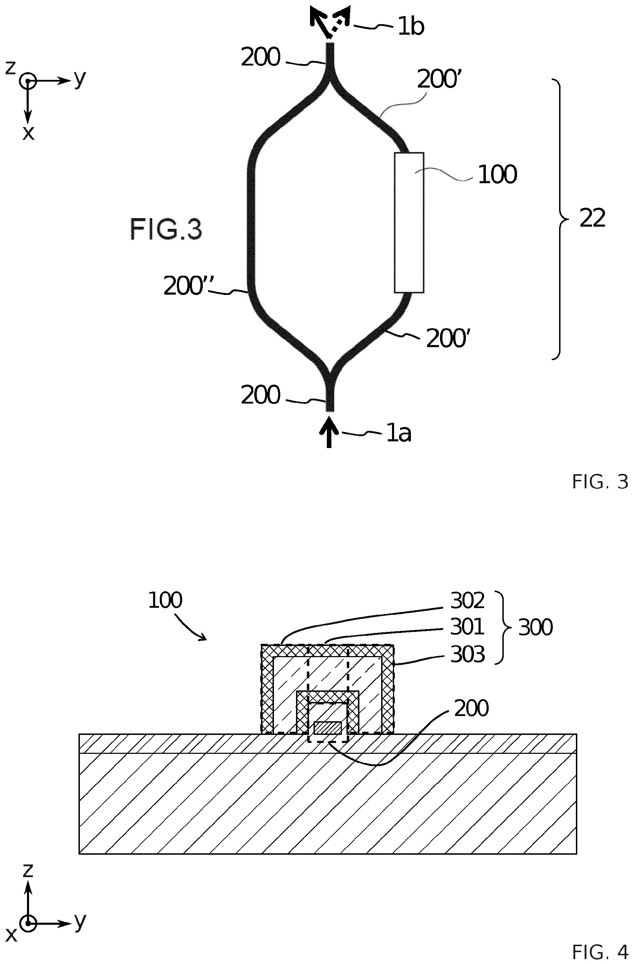

Une autre solution illustrée à la figure 3 consiste à utiliser un guide d'onde principal 200 associé à un déphaseur optique 22 en configuration Mach-Zehnder. Le guide d'onde principal 200 est divisé en deux guides d'onde secondaires 200', 200" ou bras guidant chacun une partie du faisceau lumineux 1a. L'une des parties du faisceau lumineux est déphasée par un modulateur de phase 100 associé à l'un des bras 200' du déphaseur 22, dit bras de déphasage. Après déphasage, la recombinaison des deux parties du faisceau lumineux permet de modifier la direction de propagation du faisceau lumineux 1b en sortie du guide d'onde principal 200. En modulant la phase de la partie du faisceau lumineux se propageant dans le bras de déphasage du déphaseur 22, il est ainsi possible d'induire un balayage du faisceau lumineux 1b en sortie du guide d'onde principal 200. D'autres configurations de déphaseurs optiques sont également possibles, par exemple du type réseaux optiques à commande de phase ou OPA (optical phased arrays). Ces déphaseurs comprennent généralement au moins un guide d'onde et un modulateur de phase associé au guide d'onde.

Les guides d'onde peuvent typiquement être réalisés sur puce de silicium, via les technologies de la microélectronique. Le principe de la modulation de phase est typiquement basé sur une modulation de l'indice de réfraction au sein du guide d'onde. Différentes solutions techniques peuvent être implémentées pour générer cette modulation d'indice.

Selon une solution, la modulation d'indice peut être générée par un effet thermo-optique. Dans ce cas, le modulateur de phase comprend une résistance chauffante intégrée à proximité du guide d'onde. Lorsque l'on fait passer un courant dans cette résistance, une élévation de température par effet Joule induit une variation d'indice. Le document « K. Van Acoleyen, W. Bogaerts, J. Jágerská, N. L. Thomas, R. Houdré, and R. Baets, Off-chip beam steering with a one-dimensional optical phased array on silicon-on-insulator, Opt. Lett., vol. 34, no. 9, pp. 1477-1479 (2009) » divulgue un dispositif de balayage basé sur une telle modulation d'indice par effet thermo-optique. Cette solution induit cependant une forte consommation électrique.

Selon une autre solution, la modulation d'indice peut être générée par une zone de charge d'espace au sein du guide d'onde. Dans ce cas, le modulateur de phase comprend typiquement une diode PIN intégrée au guide d'onde. En polarisant la diode PIN, la concentration de porteurs varie au sein du guide d'onde et modifie en conséquence l'indice de réfraction. Le document « Behrooz Abiri, Firooz Aflatouni, Angad Rekhi and Ali Hajimiri, Electronic Two-Dimensional Beam Steering for Integrated Optical Phased Arrays, M2K.7. OSA (2014) » divulgue un dispositif de balayage basé sur une telle modulation d'indice par déplétion de porteurs. La réalisation de diodes PIN pour la modulation d'indice nécessite cependant un nombre d'étapes technologiques important. Cela augmente le coût du dispositif de balayage. Selon une autre solution, la modulation d'indice peut être générée par un effet piézoélectrique. Dans ce cas, le modulateur de phase comprend un actionneur piézoélectrique placé à proximité du guide d'onde. En polarisant l'actionneur, une contrainte mécanique est engendrée au sein du guide d'onde. Cette contrainte mécanique modifie alors l'indice de réfraction. Le document « Hosseini, Stress-optic modulator in TriPlex platform using a piezoelectric lead zirconate titanate (PZT) thin film, Optics express 14018 (2015) » divulgue un déphaseur optique comprenant un tel modulateur. Le document US 2004/096155 A1 divulgue un autre dispositif optique comprenant un modulateur de phase piézoélectrique. Un autre dispositif optique comprenant un modulateur de phase piézoélectrique décalé par rapport au guide d'onde est divulgué par le document US 2019/219887 A1. L'amplitude des variations d'indice obtenue par ces solutions reste cependant limitée.

Un objet de la présente invention est de pallier au moins en partie les inconvénients des solutions mentionnées ci-dessus.

En particulier, un objet de la présente invention est de proposer un modulateur de phase permettant d'augmenter l'amplitude des variations d'indice de réfraction dans un guide d'onde.

Les autres objets, caractéristiques et avantages de la présente invention apparaîtront à l'examen de la description suivante et des dessins d'accompagnement. Il est entendu que d'autres avantages peuvent être incorporés. En particulier, certaines caractéristiques et certains avantages du modulateur de phase peuvent s'appliquer *mutatis mutandis* au procédé, et réciproquement.

### RESUME

Pour atteindre les objectifs mentionnés ci-dessus, un premier aspect de l'invention concerne un modulateur de phase pour faisceau lumineux comprenant :
- un guide d'onde présentant un axe longitudinal dirigé selon une première direction, le guide d'onde étant destiné à guider un faisceau lumineux principalement le long de l'axe longitudinal, et
- un actionneur piézoélectrique configuré pour appliquer au moins une contrainte mécanique au sein dudit guide d'onde en réponse à une polarisation électrique.

Le modulateur de phase est configuré de sorte que l'actionneur couvre au moins deux côtés du guide d'onde et de sorte que la résultante des contraintes appliquées par l'actionneur sur le guide d'onde, au niveau de son axe longitudinal, ne soit pas nulle. Ainsi, l'actionneur présente au moins une dissymétrie par rapport à l'axe longitudinal du guide d'onde. Cela permet d'augmenter l'état de contrainte au sein du guide d'onde. De préférence, l'actionneur comprend une première partie couvrant un premier côté du guide d'onde. Cette première partie présente de préférence un premier axe de symétrie essentiellement parallèle à l'axe longitudinal et une dimension principale L1 prise selon une deuxième direction d'un plan transverse à l'axe longitudinal. Le premier axe de symétrie est de préférence décalé de l'axe longitudinal par une distance de décalage d1 prise selon la deuxième direction.

Avantageusement, l'actionneur comprend au moins une deuxième partie couvrant un deuxième côté du guide d'onde. De préférence, ladite deuxième partie présente un deuxième axe de symétrie essentiellement parallèle à l'axe longitudinal et une dimension principale L2 prise selon une troisième direction du plan transverse à l'axe longitudinal.

La première partie de l'actionneur permet d'appliquer une première contrainte mécanique au guide d'onde. Lorsque l'actionneur est électriquement polarisé, la déformation de la première partie de l'actionneur est plus importante au bord qu'au centre de celle-ci. Il est donc avantageux de décaler la position du guide d'onde sous l'actionneur, à proximité du bord de cette première partie, de façon à ce que le guide d'onde soit soumis à un état de contrainte plus important.

Pour augmenter encore l'état de contrainte dans le guide d'onde, il est apparu dans le cadre du développement de la présente invention qu'une deuxième partie d'actionneur pouvait avantageusement être adjointe sur un deuxième côté du guide d'onde. Cette deuxième partie de l'actionneur permet d'appliquer une deuxième contrainte mécanique au guide d'onde. L'effet de bras de levier exercé sur le guide d'onde peut ainsi être amplifié par cette deuxième partie d'actionneur. L'état de contrainte dans le guide d'onde résultant de l'application des première et deuxième contraintes mécaniques est ainsi largement augmenté.

Les développements ayant conduit à la présente invention ont montré que l'augmentation de contrainte est effectivement observée si les composantes des tenseurs de contraintes des première et deuxième contraintes ne s'opposent pas au sein du guide d'onde. Cette situation est notamment atteinte lorsqu'une dissymétrie est introduite dans la géométrie de l'actionneur et/ou dans le positionnement de l'actionneur vis-à-vis du guide d'onde. La dissymétrie dans la géométrie de l'actionneur est typiquement réalisée en ajoutant une deuxième partie d'actionneur sur un deuxième côté du guide d'onde. La dissymétrie dans le positionnement de l'actionneur vis-à-vis du guide d'onde est typiquement réalisée en décalant le premier et/ou le deuxième axe de symétrie de la première et/ou de la deuxième partie d'actionneur relativement à l'axe longitudinal du guide d'onde.

Pour augmenter l'état de contrainte au sein d'un guide d'onde, une configuration d'actionneur telle qu'illustrée à la figure 4 est une solution alternative qui aurait pu être envisagée. Cette solution alternative n'a pas été retenue dans le cadre de la présente invention car il a été identifié qu'un tel actionneur 300 comprenant trois parties 301, 302, 303 régulièrement réparties autour du guide d'onde 200 engendrait un état de contrainte dans le guide d'onde moins important que les cas envisagés par l'invention. Cette solution non retenue ne bénéficie pas de l'augmentation synergique de l'état de contrainte, induite notamment par l'effet de bras de levier. Les première, deuxième et troisième contraintes appliquées respectivement par les trois parties 301, 302, 303 peuvent éventuellement se compenser en partie, conduisant à une diminution de l'état de contrainte au sein du guide d'onde. Cette solution, bien qu'envisageable, s'avère donc en pratique inopérante, et n'a pas été retenue.

Au contraire, l'invention permet, en introduisant des première et deuxième contraintes agissant de façon synergique et bénéficiant notamment de l'effet de bras de levier, d'augmenter significativement l'état de contrainte au sein du guide d'onde par rapport aux solutions connues. Le modulateur de phase selon l'invention permet ainsi d'augmenter significativement l'amplitude des variations d'indice de réfraction dans un guide d'onde. Un tel modulateur peut ainsi être avantageusement utilisé dans un dispositif de balayage à déphaseur optique. D'autres applications, par exemple dans les télécommunications, peuvent être envisagées pour un tel modulateur.

Selon une possibilité, le premier axe de symétrie est un ensemble de barycentres de la première partie d'actionneur, lesdits barycentres étant définis pour des sections de la première partie, dans des plans transverses à l'axe longitudinal.

Selon une possibilité, le deuxième axe de symétrie est un ensemble de barycentres de la deuxième partie d'actionneur, lesdits barycentres étant définis pour des sections de la deuxième partie, dans des plans transverses à l'axe longitudinal.

Un deuxième aspect de l'invention concerne un procédé de fabrication d'un tel modulateur de phase. Ce procédé comprend notamment les étapes suivantes :
- Former une couche en un matériau de gaine d'épaisseur e'gaine sur un substrat en silicium,
- Former un motif de guide d'onde en un matériau de cœur, ledit motif présentant un axe longitudinal dirigé selon une première direction,
- Enrober le motif par un enrobage à base du matériau de gaine,
- Structurer l'enrobage de façon à former un premier côté et un deuxième côté du guide d'onde,
- Déposer des premier et deuxième empilements piézoélectriques respectivement sur les premier et deuxième côtés du guide d'onde, de façon à former des premières et deuxième parties d'actionneur,
- Structurer le premier empilement de sorte que la première partie d'actionneur présente un premier axe de symétrie essentiellement parallèle à l'axe longitudinal et décalé de l'axe longitudinal par une distance de décalage d1 prise selon une deuxième direction d'un plan transverse à l'axe longitudinal.

Un autre aspect de l'invention concerne un système optique comprenant au moins un modulateur de phase selon le premier aspect. Ce système peut être, par exemple et de façon non limitative, un système de télécommunications, un système d'imagerie et de télédétection tel qu'un LIDAR, un réseau optique à commande de phase, un commutateur optique.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
La FIGURE 1 illustre un système de télédétection de type LIDAR, selon l'art antérieur.
La FIGURE 2 illustre un dispositif de balayage d'un LIDAR, selon l'art antérieur.
La FIGURE 3 illustre un déphaseur optique d'un dispositif de balayage, selon l'art antérieur.
La FIGURE 4 illustre une solution de modulateur de phase qui diffère de la solution retenue dans le cadre de la présente invention
La FIGURE 5A illustre un modulateur de phase, selon un mode de réalisation de la présente invention.
La FIGURE 5B est une vue agrandie du modulateur de phase illustré à la FIGURE 5A. La FIGURE 6 illustre un réseau optique à commande de phase comprenant des modulateurs de phase selon un mode de réalisation de la présente invention.
Les FIGURES 7A à 7E illustrent des étapes d'un procédé de fabrication d'un modulateur de phase selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, les dimensions des différents éléments du modulateur de phase (cœur et gaine du guide d'onde, première et deuxième parties de l'actionneur piézoélectrique...) ne sont pas forcément représentatives de la réalité.

### DESCRIPTION DÉTAILLÉE

Avant d'entamer une revue détaillée de modes de réalisation de l'invention, il est rappelé que l'invention selon son premier aspect comprend notamment les caractéristiques optionnelles ci-après pouvant être utilisées en association ou alternativement :
Selon un exemple, le modulateur de phase pour faisceau lumineux comprend :
   - un guide d'onde présentant un axe longitudinal dirigé selon une première direction, le guide d'onde étant destiné à guider un faisceau lumineux principalement le long de l'axe longitudinal, et
   - un actionneur piézoélectrique configuré pour appliquer une contrainte mécanique au sein dudit guide d'onde en réponse à une polarisation électrique, ledit actionneur comprenant une première partie couvrant un premier côté du guide d'onde, ladite première partie présentant un premier barycentre dans un plan transverse à l'axe longitudinal, ledit premier barycentre étant décalé de l'axe longitudinal du guide d'onde par une distance de décalage d1 prise selon une deuxième direction dans le plan transverse à l'axe longitudinal, ledit actionneur comprenant en outre une deuxième partie couvrant un deuxième côté du guide d'onde.
Selon un exemple, la deuxième partie présente un deuxième barycentre dans le plan transverse à l'axe longitudinal.
Selon un exemple, le deuxième barycentre est décalé de l'axe longitudinal par une distance de décalage d2 prise selon une troisième direction dans le plan transverse à l'axe longitudinal.
Selon un exemple, la distance de décalage d1 est comprise entre 15 % et 50% de la dimension principale L1. Cela permet d'augmenter la première contrainte mécanique appliquée au guide d'onde par la première partie de l'actionneur, par un effet de bras de levier.
Selon un exemple, le deuxième axe de symétrie est décalé de l'axe longitudinal par une distance de décalage d2 prise selon la troisième direction.
Selon un exemple, la distance de décalage d2 est comprise entre 15 % et 50% de la dimension principale L2. Cela permet d'augmenter la deuxième contrainte mécanique appliquée au guide d'onde par la deuxième partie de l'actionneur, par un effet de bras de levier.
Selon un exemple, les première et deuxième parties de l'actionneur présentent respectivement des première et deuxième faces tournées en regard des premier et deuxième côtés du guide d'onde, lesdites première et deuxième faces formant entre elles un angle compris entre 90° et 135°. Un angle de 90° permet de maximiser la contrainte appliquée. Un angle de 135° permet de faciliter la fabrication des parties d'actionneur, notamment le dépôt des différentes couches métalliques et piézoélectriques formant les parties d'actionneur. L'angle formé entre les première et deuxième faces pourra ainsi être choisi entre 90° et 135° en fonction des besoins. Selon un exemple, les première et deuxième parties de l'actionneur sont solidaires entre elles. Cela permet de polariser les deux parties simultanément. Les deux parties d'actionneur sont ainsi actionnées simultanément.
Selon un exemple, l'actionneur comprend uniquement une première partie et une deuxième partie.
Selon un exemple, la première partie et l'au moins une deuxième partie de l'actionneur sont conformées de sorte que la résultante des contraintes appliquées par l'actionneur sur le guide d'onde, au niveau de son axe longitudinal ne soit pas nulle.
Selon un exemple, le modulateur de phase est configuré de sorte que l'actionneur couvre au moins deux côtés du guide d'onde. En outre l'actionneur ne présente pas une symétrie par rapport à un axe ou un plan passant par l'axe XX longitudinal du guide d'onde. Cela permet d'augmenter les contraintes exercées par l'actionneur par un effet de bras de levier.
Selon un exemple, l'actionneur est configuré de sorte à couvrir deux cotés uniquement du guide d'onde.
Selon un exemple, le deuxième côté du guide d'onde se trouve sensiblement à l'aplomb d'un bord de la première partie de l'actionneur. Cela permet de maximiser l'effet de bras de levier exercé par la première partie d'actionneur.
Selon un exemple, le guide d'onde comprend un cœur et une gaine entourant le cœur. Selon un exemple, les première et deuxième parties sont au contact de la gaine. Cela permet de transmettre directement la déformation des première et deuxième parties d'actionneur à la gaine du guide d'onde.
Selon un exemple, la gaine présente une épaisseur e_{gaine}, e'gaine, l_{gaine}, prise dans le plan transverse, supérieure ou égale à 1 µm. Cela permet de limiter voire de supprimer les pertes optiques dans le guide d'onde.
Selon un exemple, le cœur présente une face inférieure sensiblement au même niveau qu'un bord de la deuxième partie de l'actionneur. Cela permet de maximiser l'effet de bras de levier exercé par la deuxième partie d'actionneur.
Selon un exemple, la dimension principale L1 est comprise entre 5 µm et 60 µm, avantageusement entre 10 µm et 60 µm, encore plus avantageusement entre 20 µm et 60 µm.
Selon un exemple, la dimension principale L2 est comprise entre 4 µm et 20 µm, avantageusement entre 5 µm et 10 µm.
Selon un exemple, le rapport entre la dimension principale L1 et une largeur du cœur l_{coeur}, prise selon la deuxième direction, est compris entre 8 et 100, avantageusement entre 15 et 100, encore plus avantageusement entre 30 et 100.
Selon un exemple, le rapport entre la dimension principale L2 et une hauteur du cœur e_{coeur}, prise selon la troisième direction, est compris entre 4 et 50, avantageusement entre 6 et 50, encore plus avantageusement entre 8 et 50.
Selon un exemple, la dimension principale L2 est strictement inférieure à 0,5.L1. Selon un exemple, la dimension principale L1 est strictement supérieure à 2.L2. L'invention selon son deuxième aspect comprend notamment les caractéristiques optionnelles ci-après pouvant être utilisées en association ou alternativement :
   Selon un exemple, les premier et deuxième empilements piézoélectriques sont continus entre eux et comprennent chacun une couche en un matériau piézoélectrique intercalée entre des première et deuxième couches métalliques.
Selon un exemple, le procédé comprend en outre une formation de premier et deuxième contacts électriques respectivement sur les première et deuxième couches métalliques.

Sauf incompatibilité, des caractéristiques techniques décrites en détail pour un mode de réalisation donné peuvent être combinées aux caractéristiques techniques décrites dans le contexte d'autres modes de réalisation décrits à titre exemplaire et non limitatif, de manière à former un autre mode de réalisation qui n'est pas nécessairement illustré ou décrit. Un tel mode de réalisation n'est évidemment pas exclu de l'invention.

Dans la présente invention, le modulateur de phase est avantageusement destiné à la réalisation de dispositifs de balayage de faisceaux lumineux. Il peut notamment être intégré dans des déphaseurs optiques de type Mach-Zehnder ou dans des réseaux optiques à commande de phase OPA.

L'invention peut cependant être mise en œuvre plus largement pour différents dispositifs optoélectroniques. L'invention peut notamment être mise en œuvre dans le cadre de commutateurs optiques et de modulateurs d'intensité, par exemple dans le domaine des télécommunications.

Sauf mention explicite, il est précisé que, dans le cadre de la présente invention, la disposition relative d'une troisième couche intercalée entre une première couche et une deuxième couche, ne signifie pas obligatoirement que les couches sont directement au contact les unes des autres, mais signifie que la troisième couche est soit directement au contact des première et deuxième couches, soit séparée de celles-ci par au moins une autre couche ou au moins un autre élément.

Les étapes du procédé telles que revendiquées s'entendent au sens large et peuvent éventuellement être réalisées en plusieurs sous-étapes. Une étape peut ainsi regrouper une série de sous-étapes.

On entend par un élément qui « s'étend selon un axe longitudinal », un élément qui présente généralement une forme allongée.

Dans la présente demande, les premier et deuxième axes de symétrie peuvent s'entendre de façon générale comme des premier et deuxième ensembles de barycentres. Cela s'applique par exemple au cas où les première et deuxième parties d'actionneur ne présentent pas rigoureusement de symétries, au sens mathématique. Cela peut notamment être le cas lorsque les dimensions des différentes structures (actionneur, guide d'onde) ne sont pas parfaitement constantes. Celles-ci doivent s'apprécier aux tolérances de fabrication près. Cela peut également être le cas lorsque la première et/ou la deuxième partie d'actionneur présente un biseau unilatéral. L'axe de symétrie de la structure considérée doit dans ce cas-là s'apprécier comme étant l'ensemble des barycentres de ladite structure.

On entend par un substrat, une couche, un dispositif, « à base » d'un matériau M, un substrat, une couche, un dispositif comprenant ce matériau M uniquement ou ce matériau M et éventuellement d'autres matériaux, par exemple des éléments d'alliage, des impuretés ou des éléments dopants.

Un repère, de préférence orthonormé, comprenant les axes x, y, z dirigés selon les première, deuxième et troisième directions est représenté sur les figures annexées.

Dans la présente demande de brevet, on parlera préférentiellement d'épaisseur pour une couche et de hauteur pour une structure ou un dispositif. L'épaisseur est prise selon une direction normale au plan d'extension principal de la couche, et la hauteur est prise perpendiculairement au plan basal xy du substrat. Ainsi, une couche présente typiquement une épaisseur selon z, et un cœur de guide d'onde présente une hauteur selon z. Les termes relatifs « sur », « surmonte », « sous », « sous-jacent » se réfèrent à des positions prises selon la direction z.

Les valeurs dimensionnelles s'entendent aux tolérances de fabrication et de mesure près.

Les termes « sensiblement », « environ », « de l'ordre de » signifient, lorsqu'ils se rapportent à une valeur, « à 10% près » de cette valeur ou, lorsqu'ils se rapportent à une orientation angulaire, « à 10° près » de cette orientation. Ainsi, une direction sensiblement normale à un plan signifie une direction présentant un angle de 90±10° par rapport au plan.

Afin de déterminer les caractéristiques structurelles et géométriques d'un modulateur de phase, une analyse par microscopie électronique à balayage (MEB) ou par microscopie électronique à transmission (MET) peut être effectuée.

En particulier, une observation en coupe transversale du guide d'onde et de l'actionneur peut déterminer si l'actionneur comprend au moins deux parties disposées sur deux côtés du guide d'onde. Une telle observation permet également de déterminer les positions relatives des parties d'actionneur vis-à-vis du guide d'onde, et notamment si celles-ci sont décalées par rapport à l'axe longitudinal du guide d'onde.

L'état de contrainte du guide d'onde soumis à l'action de l'actionneur piézoélectrique peut par exemple être évalué par le biais de méthodes de simulation par éléments finis. Les logiciels Comsol, Coventor ou ANSYS, largement connus dans ce domaine, peuvent être utilisés à ces fins.

Un modulateur de phase comprenant au moins deux parties d'actionneur piézoélectriques disposées autour d'un guide d'onde de façon à générer de fortes contraintes mécaniques dans le guide d'onde peut être un exemple d'indice de la mise en œuvre de la présente invention.

Un principe général de l'invention consiste à exercer une contrainte au sein d'un guide d'onde afin d'en modifier l'indice de réfraction. Un actionneur piézoélectrique en deux parties est utilisé à cet effet. Dans le cas où le guide d'onde s'étend selon x, une première partie d'actionneur piézoélectrique est formée au-dessus du guide d'onde de façon à s'étendre principalement selon un plan xy. Cette première partie d'actionneur couvre le guide d'onde et est avantageusement décalée selon y vis-à-vis du guide d'onde. Cette première partie permet de générer une première contrainte mécanique dans le guide d'onde. Une deuxième partie d'actionneur piézoélectrique est formée sur un flanc du guide d'onde de façon à s'étendre principalement selon un plan xz. Cette deuxième partie d'actionneur permet de générer une deuxième contrainte mécanique dans le guide d'onde. La configuration de cet actionneur en deux parties, en particulier le positionnement et le dimensionnement des première et deuxième parties, permet de cumuler les première et deuxième contraintes mécaniques afin d'amplifier l'état de contrainte au sein du guide d'onde.

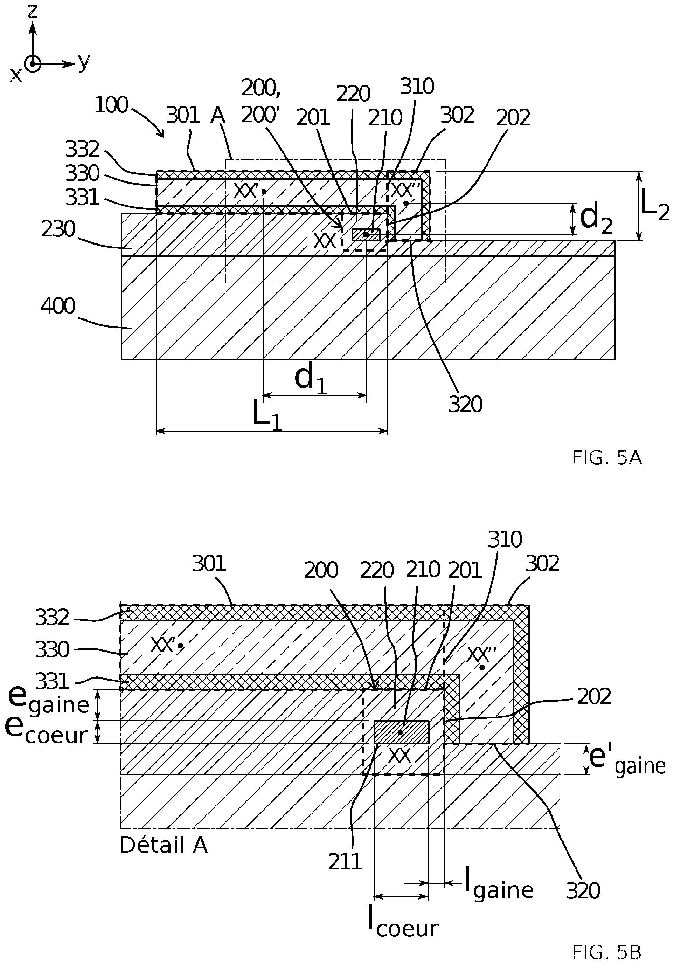

En pratique, une contrainte résultante est mesurée dans le guide d'onde lorsque l'actionneur est actionné. Cette contrainte résultante peut être décomposée en première et deuxième contraintes mécaniques, tel qu'exposé ici par souci de clarté. Un premier mode de réalisation d'un modulateur de phase selon l'invention va maintenant être décrit en référence aux figures 5A et 5B.

Le modulateur de phase 100 comprend un actionneur piézoélectrique entourant partiellement un guide d'onde 200.

Le guide d'onde 200, 200' s'étend le long d'un axe longitudinal XX dirigé selon x. Ce guide d'onde 200 est configuré pour guider la propagation d'un faisceau lumineux principalement selon x. Pour cela, le faisceau lumineux est confiné optiquement au sein du guide d'onde 200. Ce confinement peut être réalisé de façon connue par contraste d'indices de réfraction. Le guide d'onde 200 peut ainsi comprendre un cœur 210 enrobé dans une gaine 220. Le cœur 210 présente dès lors un indice de réfraction n_{c} supérieur à l'indice de réfraction n_{g} de la gaine 220. Selon une possibilité, le cœur 210 du guide d'onde 200 est à base de silicium ou de nitrure de silicium SiN. La gaine 220 est à base d'oxyde de silicium SiO₂ ou de poly-Silicium.

Le cœur 210 du guide d'onde 200 présente une largeur l_{coeur} selon y typiquement comprise entre 100 nm et 5 µm, par exemple 300 nm. Il présente une hauteur e_{coeur} selon z typiquement comprise entre 100 nm et 3 µm, par exemple 300 nm.

La gaine 220 entoure le cœur 210 et peut présenter plusieurs portions d'épaisseurs e_{gaine}, e'gaine, l_{gaine} égales ou différentes, comme illustré à la figure 5B. Ces épaisseurs de gaine e_{gaine}, e'gaine, l_{gaine} sont de préférence supérieure ou égale à 1 µm. Cela permet de limiter les pertes optiques au sein du guide d'onde 200 lors de la propagation du faisceau lumineux.

Le guide d'onde 200 se trouve typiquement au sein d'une couche d'encapsulation 230, par exemple en SiO₂, supportée par un support 400 en silicium. Un tel guide d'onde peut avantageusement être fabriqué par des technologies de l'industrie microélectronique, dites technologies silicium.

L'actionneur piézoélectrique est formé de deux parties 301, 302 s'étendant chacune sur un côté du guide d'onde 200.

Les deux parties 301, 302 sont de préférence en continuité l'une avec l'autre, comme illustré aux figures 5A, 5B. Elles comprennent au moins une couche 330 en un matériau piézoélectrique ou en un matériau ferroélectrique ou en un matériau électrostrictif. Ce matériau peut être à base de Titano-Zirconate de Plomb (PZT), de nitrure d'aluminium, d'oxyde de zinc, de poly(fluorure de vinylidène), de niobiate de lithium LiNbO₃ (LNO), de BaTiO₃, de PbTiO₃. Cette couche 330 présente une épaisseur comprise entre 100 nm et quelques micromètres, par exemple 2 µm. Une plus grande épaisseur de couche 330 permet d'obtenir une déformation du matériau plus importante lorsqu'il est soumis à une tension électrique. La contrainte induite dans le guide d'onde est dès lors augmentée. Les deux parties 301, 302 peuvent typiquement comprendre des électrodes 331, 332 destinées à appliquer une différence de potentiel dans la couche 330.

La première partie 301 s'étend le long d'un plan xy et couvre un côté 201 du guide d'onde 200. Elle présente une dimension L1 selon y comprise entre 5 µm et 60 µm, de préférence supérieure ou égale à 10 µm et encore plus préférentiellement supérieure ou égale à 20 µm, par exemple de l'ordre de 30 µm. Cette première partie 301 présente typiquement un axe de symétrie XX' dirigé selon x. Cet axe de symétrie XX' est décalé vis-à-vis de l'axe longitudinal XX d'une distance d₁ prise selon y. De préférence, cette distance d₁ est comprise entre 15 % et 50% de la dimension L1. Selon une possibilité préférée, le bord 310 de cette première partie 301 d'actionneur se trouve à l'aplomb du côté 202 du guide d'onde 200. Le bord 310 et le côté 202 sont dès lors situés sensiblement en prolongement l'un de l'autre. Le guide d'onde 200 est ainsi positionné sous une extrémité de la première partie 301 d'actionneur. Cela maximise l'effort appliqué au guide d'onde par cette première partie 301 d'actionneur, lorsque l'actionneur piézoélectrique est soumis à une tension électrique.

La deuxième partie 302 s'étend le long d'un plan xz et couvre au moins en partie un côté 202 du guide d'onde 200. Elle présente une dimension L2 selon z de préférence comprise entre 4 µm et 10 µm. Cette deuxième partie 302 présente typiquement un axe de symétrie XX" dirigé selon x. Cet axe de symétrie XX" est décalé vis-à-vis de l'axe longitudinal XX d'une distance d₂ prise selon z. De préférence, cette distance d₂ est comprise entre 15 % et 50% de la dimension L2. Selon une possibilité préférée, le bord 320 de cette deuxième partie 302 d'actionneur se trouve sensiblement au même niveau selon z que la face inférieure 211 du cœur 210. Cela maximise l'effort appliqué au guide d'onde par cette deuxième partie 302 d'actionneur, lorsque l'actionneur piézoélectrique est soumis à une tension électrique.

Selon une possibilité non illustrée, la deuxième partie 302 n'est pas strictement verticale ou perpendiculaire à la première partie 301. Le côté 202 peut ainsi présenter un angle compris entre 45° et 90° par rapport au plan de base xy. Un angle d'environ 70° peut ainsi permettre une meilleure adhérence de la partie 302 sur le côté 202 du guide d'onde 200. Un tel angle peut également permettre d'obtenir une meilleure continuité entre les parties 301 et 302. Le côté 202 n'est pas nécessairement plan. Il peut présenter une topologie courbe ou irrégulière.

Une telle configuration d'actionneur 300 permet de concentrer les contraintes mécaniques au niveau du guide d'onde 200. L'ajout d'une deuxième partie 302 d'actionneur permet quasiment de doubler l'intensité des contraintes appliquées au guide d'onde. Des simulations par éléments finis ont été effectuées avec le logiciel commercial COMSOL pour un actionneur comprenant uniquement une première partie 301 et pour un actionneur comprenant deux parties 301, 302 telles que décrites et illustrées dans la présente demande. Les résultats de ces simulations montrent que, lorsqu'une différence de potentiel de 30 V est appliquée à l'actionneur piézoélectrique, les contraintes de Von Mises dans le guide d'onde sont de l'ordre de 1,81.10⁸N/m² pour l'actionneur comprenant uniquement la première partie 301, tandis que ces contraintes sont de l'ordre de 3,25.10⁸N/m² pour l'actionneur comprenant les deux parties 301, 302.

Pour un niveau de contrainte donné, une telle augmentation de l'efficacité de l'actionneur en deux parties permet par exemple de diminuer la dimension L1 par rapport à un actionneur à une seule partie. Cela permet de réduire l'encombrement de l'actionneur. L'intégration d'un tel actionneur dans un réseau optique à commande de phase OPA est ainsi facilitée. L'augmentation de l'efficacité de l'actionneur en deux parties permet également de diminuer les tensions d'actionnement nécessaires pour atteindre le niveau de contrainte visé. Cela permet de diminuer la consommation électrique du modulateur de phase comprenant un tel actionneur en deux parties. Les performances du modulateur de phase sont ainsi améliorées.

Un tel modulateur de phase peut avantageusement être intégré à différents systèmes optiques, tels que des déphaseurs ou des réseaux optiques à commande de phase OPA.

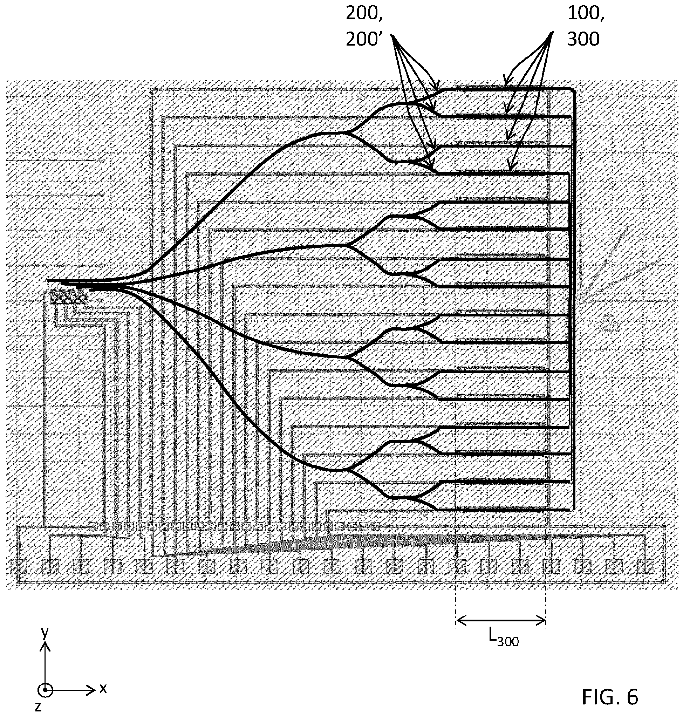

La figure 6 illustre un exemple de réseau optique à commande de phase OPA. Ce réseau comprend typiquement une pluralité de modulateurs de phase 100 sur différentes branches de guide d'onde 200. Ces modulateurs 100 comprennent des actionneurs 300 présentant des longueurs L₃₀₀ selon x qui peuvent être égales entre elles, comme illustré sur la figure 6. Alternativement, les longueurs L₃₀₀ peuvent être différentes entre elles.

La fabrication du modulateur de phase 100 peut être exécutée par des techniques de micro fabrication connues de l'homme du métier.

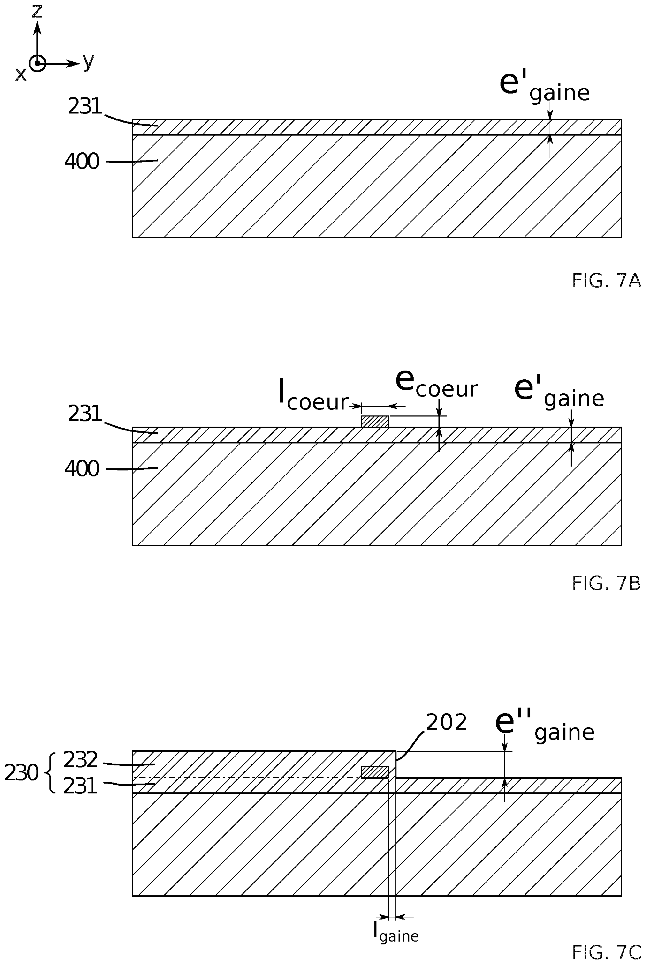

Les figures 7A à 7E présentent différentes étapes d'un procédé de fabrication du modulateur de phase 100 selon la présente invention.

Une première étape illustrée à la figure 7A consiste à former une couche 231 d'épaisseur e'gaine d'environ 2 µm sur un substrat 400. Cette couche 231 est destinée à former en partie la gaine 220 du guide d'onde 200. Elle est de préférence à base de SiO₂. Elle peut résulter de façon connue d'une oxydation thermique ou d'un dépôt conforme, par exemple par dépôt chimique en phase vapeur (CVD).

L'étape suivante illustrée à la figure 7B consiste à former un cœur 210 de guide d'onde 200 sur la couche 231. Le cœur 210 par exemple à base de SiN est typiquement formé par dépôt d'une couche SiN d'épaisseur e_{coeur} d'environ 300 nm suivi d'une lithographie et d'une gravure configurées pour conserver le motif de cœur 210 de largeur l_{coeur}. L'étape suivante illustrée à la figure 7C consiste à encapsuler le cœur 210 par une couche 232. La couche 232 est de préférence à base du même matériau que la couche 231. Les couches 231, 232 forment ainsi une couche d'encapsulation 230 dans laquelle se trouve le cœur 210. La couche 232 présente une épaisseur e"_{gaine} d'environ 1,3 µm, de manière à ce que la portion de couche 232 située au-dessus du cœur 210 présente une épaisseur d'environ 1 µm. Une étape de polissage mécano-chimique peut être effectuée de manière à planariser cette couche 232. La couche 232 est structurée par lithographie/gravure de façon à former le côté 202 du guide d'onde. Cette structuration est configurée pour conserver une épaisseur de couche 232 l_{gaine} d'environ 1 µm entre le côté 202 et le cœur 210.

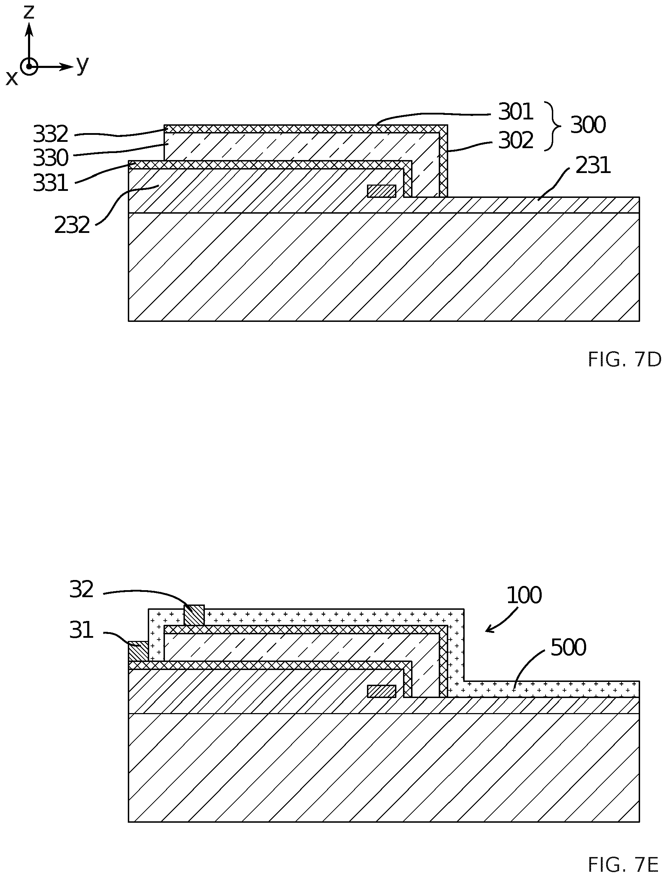

L'étape suivante illustrée à la figure 7D consiste à former les première et deuxième parties 301, 302 d'actionneur 300. A cet effet, un dépôt d'une couche métallique 331 par exemple en platine d'épaisseur environ 100 nm est effectué sur la couche 232 et sur le côté 202. De façon optionnelle, la formation d'une couche de dioxyde de titane de 20 nm d'épaisseur intercalée entre la couche 331 et la couche 232 peut être effectuée. Une couche 330 en un matériau piézoélectrique est ensuite formée sur la couche métallique 331, de préférence de façon conforme avec une épaisseur environ constante. Une couche métallique 332 par exemple en ruthénium d'épaisseur environ 100 nm est ensuite déposée sur la couche 330. Les couches métalliques 331, 332 forment deux électrodes entre lesquelles est intercalée la couche 330 piézoélectrique. L'empilement des couches 331, 330, 332 sur la face supérieure de la couche 232 forme la première partie 301 de l'actionneur 300. L'empilement des couches 331, 330, 332 sur le côté 202 de la couche 232 forme la deuxième partie 302 de l'actionneur 300. Les couches 331, 330, 332 sont de préférence continues entre les première et deuxième parties 301, 302 d'actionneur 300. Les couches 331, 330, 332 de la deuxième partie 302 peuvent prendre appui sur la couche 231. Les couches 330, 332 de la première partie 301 sont de préférence structurées par lithographie/gravure de façon à exposer une portion de couche 331 sous-jacente, comme illustrée à la figure 7D. Cette portion exposée permet ultérieurement de former un contact électrique sur l'électrode 331.

L'étape suivante illustrée à la figure 7E consiste à passiver l'actionneur te à former des contacts 31, 32 électriques sur les électrodes 331, 332. La passivation peut être effectuée en déposant une couche de passivation 500, par exemple à base de SiO₂ ou de SiN, sur les première et deuxième parties 301, 302. Cette couche de passivation 500 peut présenter une épaisseur comprise entre 100 nm et 5 µm, par exemple 300 nm.

Les contacts 31, 32 sont respectivement formés sur les électrodes 331, 332. Une ouverture de la couche de passivation 500 peut être préalablement effectuée pour exposer des portions d'électrodes 331, 332. De façon connue, les contacts peuvent être à base d'or ou de titane/or. Ils peuvent être réalisés par une technique standard dite de lift-off. Ils peuvent présenter une épaisseur de 500 nm environ.

Le modulateur de phase 100 ainsi réalisé permet d'obtenir des variations d'indice de réfraction amplifiées au sein du guide d'onde, grâce aux plus fortes contraintes mécaniques exercées dans ledit guide d'onde par l'actionneur piézoélectrique 300 en deux parties 301, 302.

L'invention n'est pas limitée aux modes de réalisations précédemment décrits et s'étend à tous les modes de réalisation couverts par les revendications.

L'actionneur peut par exemple comprendre au moins une troisième partie couvrant au moins partiellement un troisième côté du guide d'onde et présentant une dimension L3 différente de L1 et de L2.

## Revendications

1. Modulateur de phase (100) pour faisceau lumineux comprenant :
- un guide d'onde (200, 200') présentant un axe longitudinal (XX) dirigé selon une première direction (x), le guide d'onde (200, 200') étant destiné à guider un faisceau lumineux principalement le long de l'axe longitudinal (XX), et
- un actionneur piézoélectrique (300) configuré pour appliquer au moins une contrainte mécanique au sein dudit guide d'onde (200, 200') en réponse à une polarisation électrique, ledit actionneur (300) comprenant une première partie (301) couvrant un premier côté (201) du guide d'onde (200, 200'), ladite première partie (301) présentant un premier axe de symétrie (XX') essentiellement parallèle à l'axe longitudinal (XX) et une dimension principale L1 prise selon une deuxième direction (y) d'un plan (yz) transverse à l'axe longitudinal (XX), ledit premier axe de symétrie (XX') étant décalé de l'axe longitudinal (XX) par une distance de décalage d1 prise selon la deuxième direction (y),
ledit modulateur de phase (100) étant **caractérisé en ce que** l'actionneur (300) comprend au moins une deuxième partie (302) couvrant au moins partiellement un deuxième côté (202) du guide d'onde (200, 200'), ladite deuxième partie (302) présentant un deuxième axe de symétrie (XX") essentiellement parallèle à l'axe longitudinal (XX) et une dimension principale L2 prise selon une troisième direction (z) du plan (yz) transverse à l'axe longitudinal (XX).

2. Modulateur (100) selon la revendication précédente, dans lequel la première partie (301) et l'au moins une deuxième partie (302) de l'actionneur (300) sont conformées de sorte que la résultante des contraintes appliquées par l'actionneur (300) sur le guide d'onde (200), au niveau de son axe longitudinal ne soit pas nulle.

3. Modulateur (100) selon l'une quelconque des revendications précédentes, dans lequel l'actionneur (300) ne présente pas une symétrie par rapport à un axe ou un plan passant par l'axe (XX) longitudinal du guide d'onde (200).

4. Modulateur (100) selon l'une quelconque des revendications précédentes, dans lequel la distance de décalage d1 est comprise entre 15 % et 50% de la dimension principale L1.

5. Modulateur (100) selon l'une quelconque des revendications précédentes, dans lequel le deuxième axe de symétrie (XX") est décalé de l'axe longitudinal (XX) par une distance de décalage d2 prise selon la troisième direction (z).

6. Modulateur (100) selon la revendication précédente, dans lequel la distance de décalage d2 est comprise entre 15 % et 50% de la dimension principale L2.

7. Modulateur (100) selon l'une quelconque des revendications précédentes, dans lequel les première et deuxième parties (301, 302) de l'actionneur (300) présentent respectivement des première et deuxième faces tournées en regard des premier et deuxième côtés (201, 202) du guide d'onde (200, 200'), lesdites première et deuxième faces formant entre elles un angle compris entre 90° et 135°.

8. Modulateur (100) selon l'une quelconque des revendications précédentes, dans lequel les première et deuxième parties (301, 302) de l'actionneur (300) sont solidaires entre elles.

9. Modulateur (100) selon l'une quelconque des revendications précédentes, dans lequel l'actionneur (300) comprend uniquement une première partie (301) et une deuxième partie (302).

10. Modulateur (100) selon l'une quelconque des revendications précédentes, dans lequel le deuxième côté (202) du guide d'onde (200, 200') se trouve sensiblement à l'aplomb d'un bord (310) de la première partie (301) de l'actionneur.

11. Modulateur (100) selon l'une quelconque des revendications précédentes, dans lequel la dimension principale L2 est strictement inférieure à 0,5.L1.

12. Procédé de réalisation d'un modulateur de phase (100) selon l'une quelconque des revendications précédentes, comprenant les étapes suivantes :
- Former une couche (231) en un matériau de gaine d'épaisseur e'gaine sur un substrat (40) en silicium,
- Former un motif (210) de guide d'onde en un matériau de cœur, ledit motif (210) présentant un axe longitudinal (XX) dirigé selon une première direction (x),
- Enrober le motif (210) par un enrobage à base du matériau de gaine, de sorte à former un guide d'onde (200) comprenant un cœur (210) et une gaine (220),
- Structurer l'enrobage de façon à former au moins un premier côté (201) et un deuxième côté (202) du guide d'onde (200),
- Déposer des premier et deuxième empilements piézoélectriques respectivement sur les premier et deuxième côtés (201, 202) du guide d'onde (200), de façon à former des premières et deuxième parties (301, 302) d'actionneur (300).

13. Procédé selon la revendication précédente comprenant l'étape suivante :
- Structurer le premier empilement de sorte que la première partie (301) d'actionneur présente un premier axe de symétrie (XX') essentiellement parallèle à l'axe longitudinal (XX) et décalé de l'axe longitudinal (XX) par une distance de décalage d1 prise selon une deuxième direction (y) d'un plan (yz) transverse à l'axe longitudinal (XX).

14. Procédé selon l'une quelconque des deux revendications précédentes dans lequel les premier et deuxième empilements piézoélectriques sont continus entre eux et comprennent chacun une couche (330) en un matériau piézoélectrique intercalée entre des premières et deuxième couches (331, 332) métalliques, ledit procédé comprenant en outre une formation de premier et deuxième contacts (31, 32) électriques respectivement sur les premières et deuxième couches (331, 332) métalliques.

15. Système comprenant au moins un modulateur selon l'une quelconque des revendications 1 à 11, le système étant pris parmi un système de télécommunications, un système d'imagerie et de télédétection tel qu'un LIDAR, un réseau optique à commande de phase, un commutateur optique.

## Patentansprüche

1. Phasenmodulator (100) für einen Lichtstrahl, umfassend:
- einen Wellenleiter (200, 200'), der eine Längsachse (XX) aufweist, die in einer ersten Richtung (x) gerichtet ist, wobei der Wellenleiter (200, 200') dazu bestimmt ist, einen Lichtstrahl im Wesentlichen entlang der Längsachse (XX) zu leiten, und
- einen piezoelektrischen Aktor (300), der dafür ausgelegt ist, in Reaktion auf eine elektrische Polarisation mindestens eine mechanische Spannung in Inneren des Wellenleiters (200, 200') anzulegen, wobei der Aktor (300) einen ersten Teil (301) umfasst, der eine erste Seite (201) des Wellenleiters (200, 200') bedeckt, wobei der erste Teil (301) eine im Wesentlichen parallel zur Längsachse (XX) verlaufende erste Symmetrieachse (XX') und in einer quer zur Längsachse (XX) verlaufenden zweiten Richtung (y) einer Ebene (yz) eine Hauptabmessung L1 aufweist, wobei die erste Symmetrieachse (XX') in der zweiten Richtung (y) um einen Versatzabstand d1 von der Längsachse (XX) versetzt ist,
wobei der Phasenmodulator (100) **dadurch gekennzeichnet ist, dass** der Aktor (300) mindestens einen zweiten Teil (302) umfasst, der eine zweite Seite (202) des Wellenleiters (200, 200') mindestens teilweise bedeckt, wobei der zweite Teil (302) eine im Wesentlichen parallel zur Längsachse (XX) verlaufende zweite Symmetrieachse (XX") und in einer quer zur Längsachse (XX) verlaufenden dritten Richtung (z) der Ebene (yz) eine Hauptabmessung L2 aufweist.

2. Modulator (100) nach dem vorstehenden Anspruch, wobei der erste Teil (301) und der mindestens eine zweite Teil (302) des Aktors (300) so ausgebildet sind, dass die Resultierende der vom Aktor (300) an den Wellenleiter (200) angelegten Spannungen an seiner Längsachse nicht null ist.

3. Modulator (100) nach einem der vorstehenden Ansprüche, wobei der Aktor (300) in Bezug auf eine Achse oder eine Ebene, die durch die Längsachse (XX) des Wellenleiters (200) verläuft, keine Symmetrie aufweist.

4. Modulator (100) nach einem der vorstehenden Ansprüche, wobei der Versatzabstand d1 zwischen 15 % und 50 % der Hauptabmessung L1 beträgt.

5. Modulator (100) nach einem der vorstehenden Ansprüche, wobei die zweite Symmetrieachse (XX") in der dritten Richtung (z) um einen Versatzabstand d2 von der Längsachse (XX) versetzt ist.

6. Modulator (100) nach dem vorstehenden Anspruch, wobei der Versatzabstand d2 zwischen 15 % und 50 % der Hauptabmessung L2 beträgt.

7. Modulator (100) nach einem der vorstehenden Ansprüche, wobei der erste und der zweite Teil (301, 302) des Aktors (300) eine erste bzw. eine zweite Fläche aufweisen, die der ersten und der zweiten Seite (201, 202) des Wellenleiters (200, 200') zugewandt sind, wobei die erste und die zweite Fläche zwischen sich einen Winkel zwischen 90° und 135° bilden.

8. Modulator (100) nach einem der vorstehenden Ansprüche, wobei der erste und der zweite Teil (301, 302) des Aktors (300) fest miteinander verbunden sind.

9. Modulator (100) nach einem der vorstehenden Ansprüche, wobei der Aktor (300) nur einen ersten Teil (301) und einen zweiten Teil (302) umfasst.

10. Modulator (100) nach einem der vorstehenden Ansprüche, wobei die zweite Seite (202) des Wellenleiters (200, 200') im Wesentlichen lotrecht zu einer Kante (310) des ersten Teils (301) des Aktors liegt.

11. Modulator (100) nach einem der vorstehenden Ansprüche, wobei die Hauptabmessung L2 streng kleiner als 0,5.L1 ist.

12. Verfahren zur Herstellung eines Phasenmodulators (100) nach einem der vorstehenden Ansprüche, das die folgenden Schritte umfasst:
- Bilden einer Schicht (231) aus einem Mantelmaterial mit einer Dicke e'_{Mantel} auf einem Substrat (40) aus Silicium,
- Bilden eines Wellenleitermusters (210) aus einem Kernmaterial, wobei das Muster (210) eine in einer ersten Richtung (x) gerichtete Längsachse (XX) aufweist,
- Umhüllen des Musters (210) mit einer Hülle auf Basis des Mantelmaterials, um einen Wellenleiter (200) zu bilden, der einen Kern (210) und einen Mantel (220) umfasst,
- Strukturieren der Hülle, um mindestens eine erste Seite (201) und eine zweite Seite (202) des Wellenleiters (200) zu bilden,
- Abscheiden eines ersten und eines zweiten piezoelektrischen Stapels auf der ersten bzw. der zweiten Seite (201, 202) des Wellenleiters (200), um erste und einen zweiten Teil (301, 302) des Aktors (300) zu bilden.

13. Verfahren nach dem vorstehenden Anspruch, das den folgenden Schritt umfasst:
- Strukturieren des ersten Stapels so, dass der erste Teil (301) des Aktors eine im Wesentlichen parallel zur Längsachse (XX) verlaufende und in einer quer zur Längsachse (XX) verlaufenden zweiten Richtung (y) einer Ebene (yz) um einen Versatzabstand d1 von der Längsachse (XX) versetzte erste Symmetrieachse (XX') aufweist.

14. Verfahren nach einem der zwei vorstehenden Ansprüche, wobei der erste und der zweite piezoelektrische Stapel untereinander durchgängig sind und jeweils eine Schicht (330) aus einem piezoelektrischen Material umfassen, die zwischen ersten und einer zweiten Metallschicht (331, 332) eingefügt ist, wobei das Verfahren weiter ein Bilden eines ersten und eines zweiten elektrischen Kontakts (31, 32) an den ersten bzw. der zweiten Metallschicht (331, 332) umfasst.

15. System, das mindestens einen Modulator nach einem der Ansprüche 1 bis 11 umfasst, wobei das System aus einem Telekommunikationssystem, einem Bildgebungs- und Fernerkundungssystem wie etwa einem LIDAR, einem phasengesteuerten optischen Netzwerk, einem optischen Schalter ausgewählt ist.

## Claims

1. A phase modulator (100) for a light beam comprising:
- a waveguide (200, 200') having a longitudinal axis (XX) directed along a first direction (x), the waveguide (200, 200') being intended to guide a light beam mainly along the longitudinal axis (XX), and
- a piezoelectric actuator (300) configured to apply at least one mechanical stress within said waveguide (200, 200') in response to an electrical bias, said actuator (300) comprising a first portion (301) covering a first side (201) of the waveguide (200, 200'), said first portion (301) having a first axis of symmetry (XX') essentially parallel to the longitudinal axis (XX) and a main dimension L1 taken along a second direction (y) of a plane (yz) transverse to the longitudinal axis (XX), said first axis of symmetry (XX') being offset from the longitudinal axis (XX) by an offset distance d1 taken along the second direction (y),
said phase modulator (100) being **characterised in that** the actuator (300) comprises at least one second portion (302) at least partially covering a second side (202) of the waveguide (200, 200'), said second portion (302) having a second axis of symmetry (XX") essentially parallel to the longitudinal axis (XX) and a main dimension L2 taken along a third direction (z) of the plane (yz) transverse to the longitudinal axis (XX).

2. The modulator (100) according to the preceding claim, wherein the first portion (301) and the at least one second portion (302) of the actuator (300) are shaped such that the resultant of the stresses applied by the actuator (300) on the waveguide (200), at its longitudinal axis is not zero.

3. The modulator (100) according to any one of the preceding claims, wherein the actuator (300) does not have a symmetry relative to an axis or a plane passing through the longitudinal axis (XX) of the waveguide (200).

4. The modulator (100) according to any one of the preceding claims, wherein the offset distance d1 is comprised between 15% and 50% of the main dimension L1.

5. The modulator (100) according to any one of the preceding claims, wherein the second axis of symmetry (XX") is offset from the longitudinal axis (XX) by an offset distance d2 taken along the third direction (z).

6. The modulator (100) according to the preceding claim, wherein the offset distance d2 is comprised between 15% and 50% of the main dimension L2.

7. The modulator (100) according to any one of the preceding claims, wherein the first and second portions (301, 302) of the actuator (300) have respectively first and second faces facing the first and second sides (201, 202) of the waveguide (200, 200'), said first and second faces forming therebetween an angle comprised between 90° and 135°.

8. The modulator (100) according to any one of the preceding claims, wherein the first and second portions (301, 302) of the actuator (300) are secured to each other.

9. The modulator (100) according to any one of the preceding claims, wherein the actuator (300) comprises only a first portion (301) and a second portion (302).

10. The modulator (100) according to any one of the preceding claims, wherein the second side (202) of the waveguide (200, 200') is located substantially in vertical alignment with an edge (310) of the first portion (301) of the actuator.

11. The modulator (100) according to any one of the preceding claims, wherein the main dimension L2 is strictly less than 0.5.L1.

12. A method for producing a phase modulator (100) according to any one of the preceding claims, comprising the following steps
- Forming a layer (231) made of a sheath material of thickness e'sheath on a silicon substrate (40),
- Forming a waveguide pattern (210) made of a core material, said pattern (210) having a longitudinal axis (XX) directed along a first direction (x),
- Coating the pattern (210) with a coating based on the sheath material, so as to form a waveguide (200) comprising a core (210) and a sheath (220),
- Structuring the coating so as to form at least one first side (201) and one second side (202) of the waveguide (200),
- Depositing first and second piezoelectric stacks respectively on the first and second sides (201, 202) of the waveguide (200), so as to form first and second portions (301, 302) of actuator (300).

13. The method according to the preceding claim comprising the following step:
- Structuring the first stack such that the first portion (301) of the actuator has a first axis of symmetry (XX') which is essentially parallel to the longitudinal axis (XX) and offset from the longitudinal axis (XX) by an offset distance d1 taken along a second direction (y) of a plane (yz) transverse to the longitudinal axis (XX).

14. The method according to any one of the two preceding claims, wherein the first and second piezoelectric stacks are continuous with each other and each comprise a layer (330) made of a piezoelectric material interposed between first and second metal layers (331, 332), said method further comprising forming first and second electrical contacts (31, 32) respectively on the first and second metal layers (331, 332).

15. A system comprising at least one modulator according to any one of claims 1 to 11, the system being taken from a telecommunications system, an imaging and remote sensing system such as a LIDAR, an optical phased array, an optical switch.
